Europäisches Patentamt

European Patent Office

Office européen des brevets

(11) Veröffentlichungsnummer: **0 354 203**
**A2**

## (12) EUROPÄISCHE PATENTANMELDUNG

(21) Anmeldenummer: 89890183.0

(22) Anmeldetag: 07.07.89

(51) Int. Cl.⁵: **C 04 B 35/54**
C 01 B 31/04

(30) Priorität: **04.08.88 AT 1966/88**

(43) Veröffentlichungstag der Anmeldung:
**07.02.90 Patentblatt 90/06**

(84) Benannte Vertragsstaaten:
**BE DE ES FR GB IT SE**

(71) Anmelder: **Voest-Alpine Maschinenbau Gesellschaft
m.b.H.
Turmstrasse 44
A-4020 Linz (AT)**

(72) Erfinder: **Holuigue, C. Ing.
3803 Route du Plateau D'Assy
F-74190 Le Fayet (FR)**

**Panholzer, Heinrich, Dipl.-Ing. Dr.
Brantnerweg 9/18
A-4020 Linz (AT)**

**Maier, Karl-Wilhelm, Dipl.-Ing.
Quittenweg 23
D-8510 Fürth (DE)**

**Trimmel, Wolfgang, Dipl.-Ing.
Erzherzog-Johannstrasse 9
A-8700 Leoben (AT)**

(74) Vertreter: **Hübscher, Helmut, Dipl.-Ing.
Patentanwälte Dipl.-Ing. Gerhard Hübscher Dipl.-Ing.
Helmut Hübscher Dipl.-Ing. Heiner Hübscher
Spittelwiese 7
A-4020 Linz (AT)**

(54) **Verfahren und Vorrichtung zum Graphitieren von Kohlenstoffkörpern.**

(57) Zum Graphitieren von Kohlenstoffkörpern wird ein mit Schutzgas gefüllter Graphitierungsofen (1) vorgeschlagen, durch den die zu einem Strang (2) zusammengespannten Kohlenstoffkörper (3) schrittweise gefördert werden, und zwar unter einer axialen Einspannung des Stranges (2) mit einem für eine freitragende Strangführung erforderlichen Mindestdruck, der auch zwischen den Förderschritten während der Abnahme der graphitierten Kohlenstoffkörper (3) und dem Hinzufügen zu graphitierender Kohlenstoffkörper (3) aufrechterhalten wird.

FIG.1

EP 0 354 203 A2

**Beschreibung**

## Verfahren und Vorrichtung zum Graphitieren von Kohlenstoffkörpern

Die Erfindung bezieht sich auf ein Verfahren zum Graphitieren von Kohlenstoffkörpern, die stirnseitig zu einem horizontalen Strang zusammengespannt werden, der in Förderschritten mit einer der Länge wenigstens eines Kohlenstoffkörpers entsprechenden Schrittlänge axial durch einen Graphitierungsofen gefördert und dabei unter Stromzufuhr zumindest im Bereich eines Längenabschnittes auf die Graphitierungstemperatur erwärmt wird, wobei der Strang zwischen den Förderschritten am Ofenausgang um wenigstens einen graphitierten Kohlenstoffkörper verkürzt und am Ofeneingang um wenigstens einen zu graphitierenden Kohlenstoffkörper verlängert wird, sowie auf eine Vorrichtung zur Durchführung des Verfahrens.

Zum Graphitieren von vorgebrannten Kohlenstoffkörpern werden diese in einem Graphitierungsofen stirnseitig zu einem Strang zusammengespannt, um durch den Strang über angelegte Elektroden elektrischen Strom leiten und die Kohlenstoffkörper mit Hilfe der entstehenden Stromwärme auf die erforderliche Graphitierungstemperatur erwärmen zu können. Zur Vermeidung einer oxidierenden Ofenatmosphäre wird dabei der Graphitierungsofen entweder mit Schutzgas oder mit Kohlenstoffkörnern gefüllt. Die Füllung mit Kohlenstoffkörnern hat den Vorteil, daß der Strang bei einer horizontalen Führung durch die Kohlenstoffkörner unterstützt wird und nicht durchhängen kann. Nachteilig ist allerdings, daß die Kohlenstoffkörner der Füllung mit dem Strang miterwärmt werden, was den Energiebedarf vergrößert. Mit zunehmender Temperatur der Kohlenstoff körner verbessert sich außerdem deren elektrische Leitfähigkeit, so daß die Gefahr von zum Strang parallelen Strompfaden innerhalb der Füllung besteht.

Wird die Schüttung aus Kohlenstoffkörnern durch eine Schutzgasatmosphäre des Graphitierungsofens ersetzt. so treten zwar die der Schüttung eigenen Nachteile nicht auf, doch muß für eine entsprechende Unterstützung der Kohlenstoffkörper des Stranges gesorgt werden, weil auch die Vorteile einer körnigen Füllung hinsichtlich der Strangunterstützung nicht ausgenützt werden können. Wegen der bei einer Schutzgasatmosphäre fehlenden Strangunterstützung und der Schwierigkeiten der Stromzufuhr zu einem bewegten Strang ist daher lediglich bei Graphitierungsöfen mit einer Füllung aus Kohlenstoffkörnern eine fortlaufende Förderung des Stranges durch den Graphitierungsofen bekanntgeworden (EP-B-0 121 530), indem der Strang schrittweise durch den Ofen gefördert und nach jedem Förderschritt am Ofenausgang um einen graphitierten Kohlenstoffkörper verkürzt und am Ofeneingang um einen zu graphitierenden Kohlenstoffkörper verlängert wird. Während der Förderung wird der Strang zwischen zwei beidseits des Ofens angeordneten Spannköpfen eingespannt und über diese Spannköpfe axial um die Länge eines Kohlenstoffkörpers verschoben, wonach die Spannköpfe die Stirnseiten des Stranges zu seiner Verkürzung bzw. Verlängerung freigeben. Das Aufheben der axialen Druckspannung auf den Strang zwischen den einzelnen Förderschritten ist ja ohne weiteres möglich, da der Strang durch die Füllung aus Kohlenstoffkörnern unterstützt wird und wegen der Stromabschaltung zwischen den Förderschritten keiner Zusammenspannung zur leitenden Verbindung der einzelnen Kohlenstoffkörper bedarf. Die Kohlenstoffkörner der Füllung stellen außerdem einen vergleichsweise einfachen Stromübergang zwischen im Ofenbereich radial zum Strang verlaufenden Elektroden und dem Strang dar. Sie weisen ja im Bereich der Elektroden temperaturbedingt eine ausreichende elektrische Leitfähigkeit auf, so daß zufolge der über die Stranglänge verteilten Stromanschlüsse zwischen einer Vorwärmzone, einer Graphitierungszone und einer Kühlzone unterschieden werden kann. Durch in den Ofenraum ragende Wärmeableitkörper kann außerdem in der Kühlzone für eine zusätzliche Wärmeabfuhr gesorgt werden. Die Nachteile der Ofenfüllung aus Kohlenstoffkörpern bleiben aber erhalten, wozu noch kommt, daß sich wegen der erwünschten Strangabstützung der Förderwiderstand erhöht und die Gefahr auftritt, daß die Strangoberfläche beeinträchtigt wird.

Der Erfindung liegt somit die Aufgabe zugrunde, ein Verfahren zum Graphitieren von Kohlenstoffkörpern der eingangs geschilderten Art so zu verbessern, daß der aus den Kohlenstoffkörpern zusammengesetzte Strang unter einem vergleichsweise geringen Energiebedarf fortlaufend graphitiert werden kann, ohne eine Ofenfüllung aus Kohlenstoffkörnern vorsehen zu müssen.

Die Erfindung löst die gestellte Aufgabe dadurch, daß der Strang unter einer axialen Einspannung mit einem für eine freitragende Strangführung erforderlichen Mindestdruck durch den mit einem Schutzgas gefüllten Ofen gefördert wird und daß der Strang zwischen den Förderschritten unter Aufrechterhaltung dieser Druckspannung verkürzt und verlängert wird.

Durch das Aufrechterhalten eines für eine freitragende Strangführung erforderlichen Mindestdruckes auch während der Abnahme der graphitierten Kohlenstoffkörper am Ofenausgang und der Ergänzung des Stranges durch zu graphitierende Strangkörper am Ofeneingang wird es möglich, auf eine Ofenfüllung aus Kohlenstoffkörnern zu verzichten, ohne die fortlaufende schrittweise Förderung des Stranges durch den Graphitierungsofen zu gefährden. Es kann daher eine die Nachteile einer Schüttung aus Kohlenstoffkörnern vermeidende Schutzgasatmosphäre im Ofen vorgesehen werden, so daß der Energiebedarf entsprechend herabgesetzt wird. Die zwangsweise Miterwärmung der körnigen Füllung entfällt ja. Voraussetzung für eine freitragende Strangführung durch ein stirnseitiges Einspannen des Stranges ist, daß der für eine solche Einspannung erforderliche Mindestdruck innerhalb der Druckfestigkeit der Kohlenstoffkörper liegt, was auch für längere Stränge in an sich überraschender Weise gegeben ist. Es kann daher eine Stranglänge vorgesehen werden, die einen im Hinblick auf die zulässigen Stromstärken ausreichenden elektrischen Widerstand für eine angemessene Versorgungsspannung ermöglicht. Die axiale Druckbelastung des Stranges wirkt sich außerdem vorteilhaft hinsichtlich der Kornorientierung beim Graphitieren der Kohlenstoffkörper aus.

Durchläuft der Strang im Graphitierungsofen nacheinander eine Vorwärmzone, eine Graphitierungszone und eine Kühlzone, so kann die in der Kühlzone vom Strang abgegebene Wärme vorteilhaft zur Vorwärmung des Stranges ausgenützt werden, wenn das im Gegenstrom zum Strang durch den Graphitierungsofen geführte Schutzgas zunächst den Strang in der Kühlzone kühlt und dann nach einer Umgehung der Graphitierungszone die in der Kühlzone aufgenommene Wärme zum Teil wieder an den Strang abgibt. Das Umgehen der Graphitierungszone schließt dabei eine Beeinträchtigung der Wärmebehandlung des Stranges in der Graphitierungszone durch das Schutzgas aus, das aus dem Bereich der Graphitierungszone nicht zu Wärmetauscherzwecken abgezogen wird.

Besonders günstige Erwärmungsbedingungen werden in weiterer Ausbildung der Erfindung dadurch erhalten, daß das aus der Vorwärmzone abgezogene Schutzgas nach einer Reinigung und einer Rückkühlung wieder in die Kühlzone des Graphitierungsofens geleitet wird. Ober die Rückkühlung kann die verbleibende Restwärme des Schutzgases nach der Vorwärmung des Stranges ausgenützt werden, wobei durch den Kreislauf des Schutzgases die einzusetzende Schutzgasmenge beschränkt bleibt.

Zur Durchführung des Verfahrens kann von einem bekannten Graphitierungsofen und einem Schrittförderer mit zwei dem Graphitierungsofen vor- und nachgeordneten, den Strang aus Kohlenstoffkörpern zwischen sich axial einspannenden Spannköpfen ausgegangen werden, die in Richtung der Ofenachse wenigstens entsprechend der Länge eines Kohlenstoffkörpers verstellbar sind, wenn zur Aufrechterhaltung des für eine freitragende Strangführung erforderlichen Mindestdruckes dem eine Schutzgasatmosphäre aufweisenden, zumindest im wesentlichen gasdichte Durchtritte für den Strang bildenden Graphitierungsofen ein- und ausgangsseitig eine Hilfsspanneinrichtung mit radialen Klemmbacken für den Strang im Bereich der zu Beginn eines Förderschrittes am ausgangsseitigen und am Ende eines Förderschrittes am eingangsseitigen Spannkopf anliegenden Kohlenstoffkörper zugeordnet ist. Ober die Klemmbacken der Hilfsspanneinrichtung kann nämlich der von der Verkürzung und Verlängerung nicht betroffene, den Graphitierungsofen durchsetzende Strangabschnitt mit der erforderlichen Druckspannung beaufschlagt werden, bevor wenigstens einer der beiden Spannköpfe vom Strang zurückgezogen wird, so daß der Strangabschnitt zwischen den radialen Klemmbacken unterbrechungslos mit dem für die freitragende Strangführung erforderlichen Mindestdruck eingespannt gehalten wird, was eine wesentliche Voraussetzung für die angestrebte Strangführung durch den Graphitierungsofen ist. Ob dabei eine axiale Druckbeaufschlagung der radialen Klemmbacken erforderlich wird oder mit Hilfe dieser Klemmbacken die von den Spannköpfen aufgebrachte Druckspannung festgehalten werden kann, hängt von den jeweiligen Verhältnissen ab. Reicht eine Klemmung des Stranges zwischen den axial unverschiebbar gelagerten Klemmbacken für die Aufrechterhaltung des geforderten Mindestdruckes nicht aus, so kann auch die Strangbeaufschlagung zwischen einer der Klemmbacken und dem Spannkopf auf der dieser Klemmbacke gegenüberliegenden Ofenseite erfolgen, weil der Strang nicht nur gleichzeitig, sondern auch nacheinander verkürzt und verlängert werden kann.

Die Schutzgasatmosphäre des Graphitierungsofens verlangt einen zumindest im wesentlichen gasdichten Durchtritt für den Strang im Bereich des Ofenein- und -ausganges. Die hiefür vorgesehene Dichtung kann aus einem den Strang umschliessenden Gleitdichtung bestehen, was eine unerwünschte Gleitreibung während der Förderschritte mit sich bringt. Zur Vermeidung von Gleitreibungen zwischen der Dichtung und dem Strang können der Ofenein- und der Ofenausgang je aus einem gegenüber dem Ofengehäuse um die Schrittlänge des Schrittförderers axial verschiebbaren, hülsenartigen Verschluß bestehen, der eine Durchtrittsöffnung für den Strang mit einer radial an den Strang anstellbaren Dichtung aufweist. Der hülsenartige Verschluß kann somit mit dem Strang während des Förderschrittes mitbewegt werden, so daß sich während des Förderschrittes keine Relativbewegung zwischen dem Strang und der ihn umschließenden Dichtung einstellt. Bei vom Strang abgehobener Dichtung kann dann der Verschluß zwischen den Förderschritten wieder in die Ausgangsstellung zurückgebracht werden. Die Dichtung selbst kann aus einzelnen Segmenten eines Ringes aufgebaut sein, die einander in Umfangsrichtung übergreifen und um strangparallele Achsen verschwenkbar gelagert sind. Durch ein Verschwenken der Segmente, z. B. über einen Stellring, kann die lichte Weite des Dichtungsringes stufenlos verstellt werden.

Damit während der Rückführung der Verschlüsse in ihre Ausgangsstellung das Ofengehäuse gasdicht verschlossen bleibt, kann das Ofengehäuse im Bereich des Ofenein- und des Ofenausganges je eine ebenfalls radial an den Strang anstellbare Dichtung tragen, wobei die Dichtung der Verschlüsse mit den zugehörigen Dichtungen des Ofenein- und des Ofenausganges abwechselnd an den Strang angestellt werden. Da diese Dichtungen im Sinne einer Schleusenkammer betätigt werden, wird für den Strang ein gasdichter Durchtritt im Bereich des Ofenein- und des Ofenausganges sowohl während eines Förderschrittes als auch zwischen den einzelnen Förderschritten sichergestellt, ohne eine mit dem Strang zusammenwirkende Gleitdichtung einsetzen zu müssen. Es muß lediglich für eine gasdichte Verbindung zwischen dem Ofengehäuse und den beiden endseitigen Verschlüssen gesorgt werden, was jedoch keine konstruktiven Schwierigkeiten bereitet, weil die hülsenartigen Verschlüsse außen auf dem Ofengehäuse axial verschiebbar gelagert werden können.

Bei Graphitierungsöfen mit einer Füllung aus Kohlenstoffkörnern kann ein Stromanschluß im Bereich des Graphitierungsofens durch radial zum Strang verlaufende, in einer achsnormalen Ebene durch das Ofengehäuse geführte Elektroden gebildet werden, zwischen denen und dem Strang die Kohlenstoffkörner der Füllung eine elektrisch leitende Brücke ergeben. Ein solcher Stromanschluß kann auch bei einem erfindungsgemäßen Graphitierungsofen zum Einsatz kommen, wenn die Elektroden des Stromanschlusses zwischen quer zur Ofenachse verlaufenden, einen Strangdurchtritt aufweisenden Trennwänden angeordnet sind, die zwischen sich eine Kohlenstoffkörnerschüttung aufnehmen, die somit auf einen örtlichen Bereich begrenzt wird und lediglich der Stromzuführung dient. Die Schutzgasatmosphäre des Graphitierungsofens wird durch diese örtlich begrenzten Schüttungen aus Kohlenstoffkörnern nicht beeinträchtigt. Da Stromanschlüsse außerdem Wärmebehandlungszonen begrenzen und eine Schutzgasströmung zwischen unmittelbar benachbarten Wärmebehandlungszonen im allgemeinen unerwünscht ist, ergibt sich durch diese Trennwände zur Aufnahme der Kohlenstoffkörnerschüttung sogar eine vorteilhafte Längsunterteilung des Graphitierungsofens.

Sind innerhalb des Graphitierungsofens je mit Abstand zum Ofenein- und -ausgang zwei eine Graphitierungszone begrenzende Stromanschlüsse vorgesehen, so wird durch diese Stromanschlüsse der Graphitierungsofen in eine Vorwärmzone, eine Graphitierungszone und eine Kühlzone unterteilt. Diese Unterteilung kann für eine vorteilhafte Wärmeübertragung zwi schen dem Schutzgas und dem Strang ausgenützt werden, wenn die sich zwischen dem Ofenausgang und der Graphitierungszone ergebende Kühlzone mit der sich zwischen der Graphitierungszone und dem Ofeneingang ergebenden Vorwärmzone durch wenigstens eine die Graphitierungszone umgehende Leitung für das Schutzgas verbunden ist. Das Schutzgas kann somit im Gegenstrom zum Strang aus der Kühlzone der Vorwärmzone zugeführt werden, um die in der Kühlzone vom Strang aufgenommene Wärme dem Strang in der Vorwärmzone teilweise wieder zuzuführen. Die fühlbare Restwärme des Schutzgases kann dann zusätzlich in einem Wärmetauscher außerhalb des Graphitierungsofens rückgewonnen werden, wonach das gekühlte Schutzgas vorteilhaft im Kreislauf wieder der Kühlzone zugeleitet wird.

Anhand der Zeichnung wird das erfindungsgemäße Verfahren näher erläutert. Es zeigen

Fig. 1 eine erfindungsgemäße Vorrichtung zum Graphitieren von Kohlenstoffkörpern gemäß dem Verfahren nach der Erfindung in einem schematischen Längsschnitt,

Fig. 2 den Graphitierungsofen nach Fig. 1 ausschnittsweise im Bereich eines Stromanschlusses in einem Längsschnitt in einem größeren Maßstab,

Fig. 3 den Ofeneingang in der Verschlußstellung unmittelbar vor einem Förderschritt in einem Längsschnitt,

Fig. 4 eine der Fig. 3 entsprechende Darstellung des Ofeneinganges, jedoch mit einer Verschlußstellung nach einem Förderschritt,

Fig. 5 einen Schnitt nach der Linie V-V der Fig. 2 und

Fig. 6 einen Schnitt nach der Linie VI-VI der Fig. 2.

Die dargestellte Vorrichtung zum Graphitieren von Kohlenstoffkörpern besteht im wesentlichen aus einem Graphitierungsofen 1, durch den die stirnseitig zu einem horizontalen Strang 2 zusammengespannten, vorgebrannten Kohlenstoffkörper 3 mit Hilfe eines Schrittförderers hindurchgefördert werden. Dieser Schrittförderer weist zwei im Bereich des Ofenein ganges 4 und im Bereich des Ofenausganges 5 außerhalb des Graphitierungsofens 1 angeordnete Spannköpfe 6 auf, die über nicht dargestellte Zylindertriebe an den Strang 2 mit einem vorgegebenen Beaufschlagungsdruck angestellt und unter Beibehaltung der Druckspannung auf den Strang 2 um die Länge eines Förderschrittes koaxial zum Strang 2 verstellt werden können, so daß der zwischen den Spannköpfen 6 eingespannte Strang 2 schrittweise durch den Graphitierungsofen gefördert werden kann. Nach jedem Förderschritt wird dabei ein bereits graphitierter Kohlenstoffkörper 3 am Ofenausgang 5 vom Strang abgenommen und ein neuer, zu graphitierender Kohlenstoffkörper 3 dem Strang am Ofeneingang 4 hinzugefügt. Da der Graphitierungsofen 1, der aus einem Ofengehäuse 7 mit einer wärmeisolierenden Auskleidung 8 besteht, eine Schutzgasatmosphäre aufweist, muß der Strang 2 zumindest in weiten Bereichen ohne Unterstützung freitragend durch das Ofengehäuse 7 hindurchgefördert werden. Zu diesem Zweck ist über die Spannköpfe 6 auf den Strang 2 ein für eine freitragende Strangführung erforderlicher Mindestdruck auszuüben, der nicht nur während der einzelnen Förderschritte, sondern auch während der Verlängerung und Verkürzung des Stranges 2 zwischen den Förderschritten aufrechtbleiben muß. Um diese Forderung zu erfüllen, ist dem Graphitierungsofen 1 zusätzlich eine Hilfsspanneinrichtung für den Strang 2 mit radialen Klemmbacken 9 zugeordnet, die den Strang 2 zwischen sich festhalten können. Diese über Zylinder 10 anstellbaren Klemmbacken 9 sind im Bereich der jeweils zu Beginn eines Förderschrittes am ausgangsseitigen und am Ende eines Förderschrittes am eingangsseitigen Spannkopf 6 anliegenden Kohlenstoffkörper angeordnet, so daß durch die Hilfsspanneinrichtung der Strang 2 nach jedem Förderschritt mit Ausnahme des abzunehmenden, graphitierten Kohlenstoffkörpers unter einem eine freitragende Strangführung sicher stellenden Mindestdruck eingespannt gehalten werden kann, um einerseits nach einem Zurückziehen des Spannkopfes 6 im Bereich des Ofenausganges 5 den graphitierten Kohlenstoffkörper vom Strang 2 abnehmen und anderseits am Ofeneingang den Strang um einen Kohlenstoffkörper 3 verlängern zu können, was ebenfalls ein Zurückziehen des Spannkopfes 6 um wenigstens eine der Länge des Kohlenstoffkörpers entsprechenden Strecke verlangt. Nach dem Abnehmen des graphitierten Kohlenstoffkörpers und dem Hinzufügen eines zu graphitierenden Kohlenstoffkörpers können dann die beiden Spannköpfe 6 wieder mit einer entsprechenden Beaufschlagung an den Strang 2 angestellt und danach die Klemmbacken 9 vom Strang 2 für die Durchführung eines neuen Förderschrittes gelöst werden, weil durch den zeitlich überlappenden Einsatz der Klemmbacken 9 einerseits und der Spannköpfe 6 andererseits zumindest der zwischen den Klemmbacken 9 befindliche Strangabschnitt stets mit einer entsprechenden Druckspannung beaufschlagt wird.

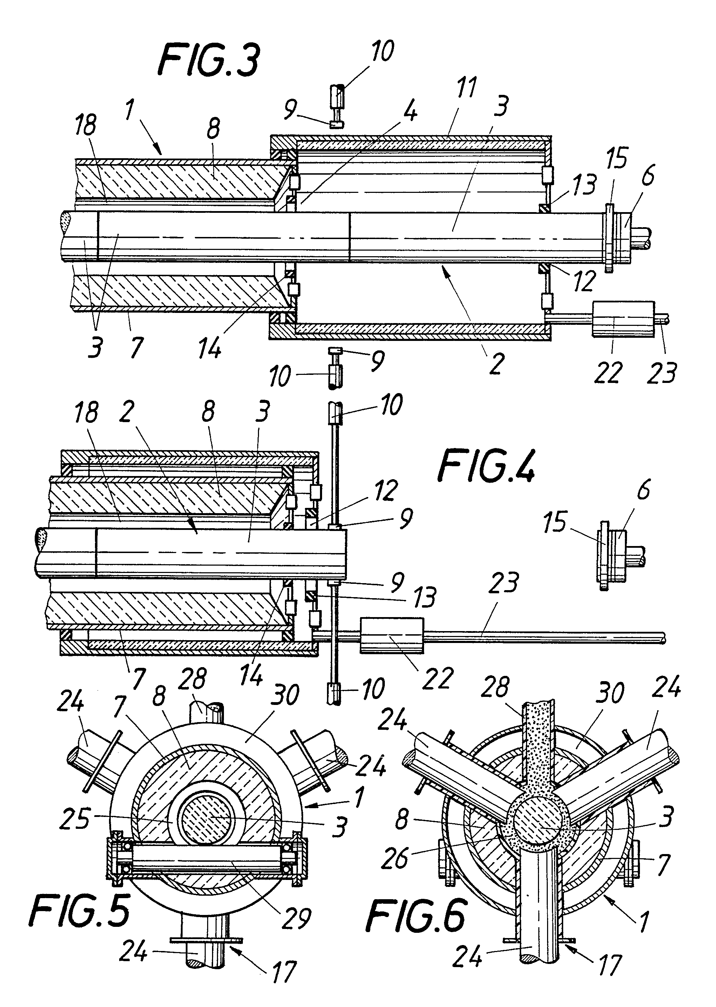

Der gasdichte Durchtritt des Stranges 2 im Bereich des Ofeneinganges 4 und des Ofenausganges 5 wird gemäß dem Ausführungsbeispiel durch hülsenartige Verschlüsse 11 sichergestellt, die außen am Ofengehäuse 7 um die Schrittlänge des Schrittförderers axial verschiebbar gelagert sind und eine Durchtrittsöffnung 12 für den Strang 2 mit einer radial an den Strang 2 anstellbaren Dichtung 13 aufweisen, wie dies insbesondere den Fig. 3 und 4 entnommen werden kann. Diese Dichtungen 13 können aus einzelnen Dichtungssegmenten aufgebaut sein, die einander in Umfangsrichtung überlappen und zu einem Ring ergänzen, wobei aufgrund der Lagerung der einzelnen Dichtungssegmente um strangparallele Schwenkachsen eine einfache Anpassung an den jeweiligen Durchmesser der Kohlenstoffkörper möglich ist. Zum Anstellen dieser Dichtung 13 an den Strang 2 müssen die Dichtungssegmente beispielsweise über einen Stellring verschwenkt werden, wie dies an sich bekannt ist und daher nicht näher dargestellt wurde.

Solche an den Strang 2 anstellbare Dichtungen sind auch dem Ofengehäuse 7 ein- und ausgangsseitig zugeordnet und tragen das Bezugszeichen 14. Die Dichtungen 13 und 14 im Bereich des Ofeneinganges 4 bzw. des Ofenausganges 5 können daher nach Art einer Schleusenkammer abwechselnd an den Strang 2 angestellt werden, so daß während der Förderschritte die Dichtung 13 der Verschlüsse 11 am Strang anliegt und die Verschlüsse 11 mit dem Strang 2 mitbewegt werden, und zwar bei geöffneten Dichtungen 14. Zum Zurückstellen der Verschlüsse 11 in die Ausgangslage werden die Dichtungen 14 an den Strang 2 angestellt und die Dichtungen 13 geöffnet, um jede Gleitreibung zwischen dem Strang 2 und den Dichtungen 13, 14 zu vermeiden.

Durch drei Stromanschlüsse 15, 16 und 17, die über die Länge des Stranges 2 verteilt sind, können unterschiedliche Wärmebehandlungszonen erreicht werden. So ergeben sich zwischen dem Stromanschluß 15, der aus einer stirnseitig an dem Strang 2 anliegenden, von dem Spannkopf 6 auf der Ofeneingangsseite getragenen Elektrode besteht, und dem mit Abstand vom Ofeneingang 4 im Bereich des Graphitierungsofens 1 vorgesehenen Stromanschluß 16 eine Vorwärmzone 18, zwischen diesem Stromanschluß 16 und dem nachfolgenden Stromanschluß 17 die eigentliche Graphitierungszone 19 und zwischen dem Stromanschluß 17 und dem Ofenausgang 5 eine Kühlzone 20. Diese unterschiedlichen Wärmebehandlungszonen lassen eine vorteilhafte Wärmeausnützung zu, weil das Schutzgas im Graphitierungsofen 1 im Gegenstrom zum Strang 2 aus der dem Ofenausgang 5 vorgeordneten Kühlzone 20 über eine die Graphitierungszone 19 umgehende Leitung 21 der Vorwärmzone 18 zugeführt werden kann, um die bei der Kühlung des Stranges 2 aufgenommene Wärme in der Vorwärmzone 18 dem Strang teilweise wieder zuzuführen. Zur Rückgewinnung der verbleibenden Restwärme des Schutzgases kann das Schutzgas aus dem eingangsseitigen Verschluß 11 abgezogen und nach einer Reinigung in einem Filter 22 einem Wärmetauscher zugeleitet werden, um dann im Kreislauf wieder über die Leitung 23 in die Kühlzone 20 zu strömen. Die Leitungsanschlüsse an den Verschlüssen 11 müssen deren Verschiebebewegung selbstverständlich folgen können, was einen entsprechenden Längenausgleich erfordert.

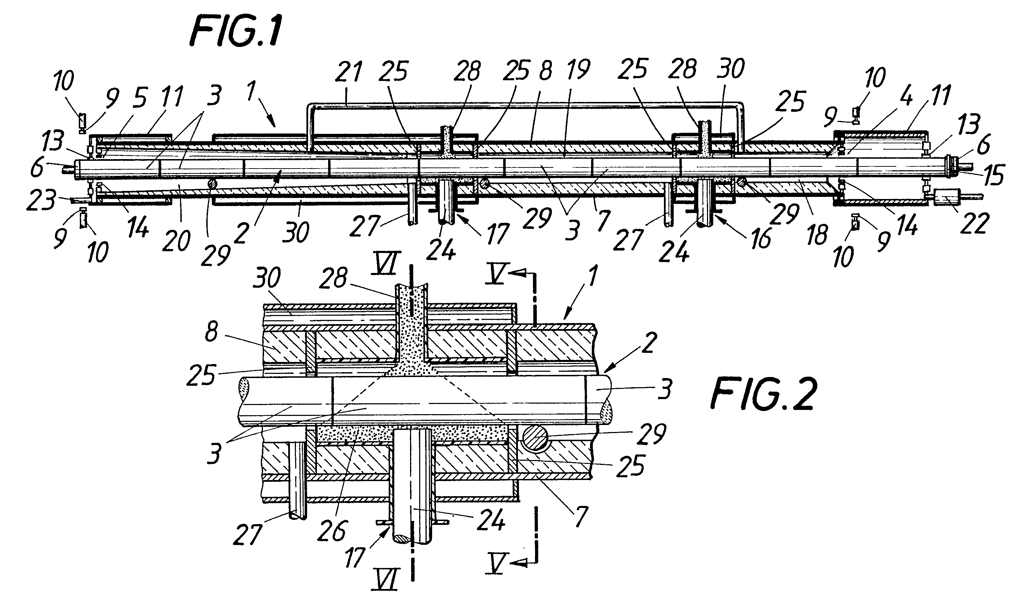

Die innerhalb des Ofenbereiches vorgesehenen Stromanschlüsse 16 und 17 müssen für eine Stromzufuhr zum bewegten Strang 2 geeignet sein. Zu diesem Zweck sind in herkömmlicher Weise für jeden Stromanschluß 16, 17 zwei oder mehrere in einer achsnormalen Ebene durch das Ofengehäuse 7 geführte, radial zum Strang verlaufende Elektroden 24 zwischen zwei quer zur Ofenachse verlaufenden, einen Strangdurchtritt aufweisenden Trennwänden 25 angeordnet, die zwischen sich eine Schüttung 26 aus Kohlenstoffpulver aufnehmen, die im Bereich zwischen den Stirnseiten der Elektroden 24 und dem Strang 2 eine elektrisch leitende Brücke bilden. Die allenfalls mit dem Strang 2 durch den Durchtritt in der ausgangsseitigen Trennwand 25 ausgeförderten Kohlenstoffpulver werden über eine entsprechende Ableitung 27 aus dem Ofen entnommen. Zur Ergänzung der Schüttung dient eine Zuleitung 28. Wie aus den Fig. 2, 5 und 6 ersichtlich ist, ist für eine entsprechende elektrische Isolierung der stromführenden Teile gesorgt, wobei sich diese Isolierung auf den Anschlußbereich beschränken kann.

Um einen gleichmäßigen Elektrodenabstand zum Strang 2 sicherzustellen, kann den Stromanschlüssen 16, 17 jeweils eine Stützrolle 29 im Graphitierungsofen 1 vorgeordnet sein. Aufgrund der Stromführung ist im Bereich der Stromanschlüsse 16 und 17 mit einer erhöhten Wärmebelastung des Ofengehäuses 7 zu rechnen. Das Ofengehäuse kann daher zumindest in diesen Bereichen mit einem Kühlmantel 30 ausgerüstet werden.

Zum Graphitieren der zu einem Strang 2 zwischen den Sapnnköpfen 6 zusammengespannten Kohlenstoffkörper 3 wird der Strang 2 unter einer zonenweisen Erwärmung schrittweise durch den Graphitierungsofen 1 gefördert. Die Ausgangsstellung vor einem Förderschritt ist in den Fig. 1 und 3 dargestellt. Nach dem Förderschritt werden die Klemmbacken 9 an den Strang 2 angestellt, um unter einem Aufrechterhalten der für eine freie Strangführung erforderlichen Druckspannung die Spannköpfe 6 vom Strang 2 für die Abnahme eines Kohlenstoffkörpers 3 vom ausgangsseitigen Strangende und für das Hinzufügen eines neuen Kohlenstoffkörpers am eingangsseitigen Strangende zurückziehen zu können. Nach dieser Verkürzung und Verlängerung des Stranges 2 werden die Spannköpfe 6 wieder stirnseitig an den Strang 2 angelegt und mit dem für die Strangeinspannung vorgesehenen Druck beaufschlagt, wonach die Klemmbacken 9 vom Strang gelöst werden können, damit der Strang 2 über eine entsprechende Spannkopfbewegung in einem weiteren Förderschritt durch den Graphitierungsofen 1 bewegt werden kann, und zwar nach einer Wiedereinschaltung des Stromes für die Strangerwärmung.

**Patentansprüche**

1. Verfahren zum Graphitieren von Kohlenstoffkörpern, die stirnseitig zu einem horizontalen Strang zusammengespannt werden, der in Förderschritten mit einer der Länge wenigstens eines Kohlenstoffkörpers entsprechenden Schrittlänge axial durch einen Graphitierungsofen gefördert und dabei unter Stromzufuhr zumindest im Bereich eines Längsabschnittes auf die Graphitierungstemperatur erwärmt wird, wobei der Strang zwischen den Förderschritten am Ofenausgang um wenigstens einen graphitierten Kohlenstoffkörper verkürzt und am Ofeneingang um wenigstens einen zu graphitierenden Kohlenstoffkörper verlängert wird, dadurch gekennzeichnet, daß der Strang unter einer axialen Einspannung mit einem für eine freitragende Strangführung erforderlichen Mindestdruck durch den mit einem Schutzgas gefüllten Graphitierungsofen gefördert wird und daß der Strang zwischen den Förderschritten unter Aufrechterhaltung dieser Druckspannung verkürzt und verlängert wird.

2. Verfahren nach Anspruch 1, wobei der Strang im Graphitierungsofen nacheinander eine Vorwärmzone, eine Graphitierungszone und eine Kühlzone durchläuft, dadurch gekennzeichnet, daß das im Gegenstrom zum Strang durch den Graphitierungsofen geführte Schutzgas zunächst den Strang in der Kühlzone kühlt und dann nach einer Umgehung der Graphitierungszone die in der Kühlzone aufgenommene Wärme zum Teil wieder an den Strang abgibt.

3. Verfahren nach Anspruch 2, dadurch gekennzeichnet, daß das aus der Vorwärmzone abgezogene Schutzgas nach einer Reinigung und einer Rückkühlung wieder in die Kühlzone des Graphitierungsofens geleitet wird.

4. Vorrichtung zum Durchführung des Verfahrens nach einem der Ansprüche 1 bis 3, bestehend aus einem Graphitierungsofen und einem Schrittförderer mit zwei dem Graphitierungsofen vor- und nachgeordneten, den Strang aus Kohlenstoffkörpern zwischen sich axial einspannenden Spannköpfen, die in Richtung der Ofenachse wenigstens entsprechend der Länge eines Kohlenstoffkörpers verstellbar sind, dadurch gekennzeichnet, daß dem eine Schutzgasatmosphäre aufweisenden, zumindest im wesentlichen gasdichte Durchtritte (12) für den Strang (2) bildenden Graphitierungsofen (1) ein- und ausgangsseitig eine Hilfsspanneinrichtung mit radialen Klemmbacken (9) für den Strang (2) im Bereich der zu Beginn eines Förderschrittes am ausgangsseitigen und am Ende eines Förderschrittes am eingangsseitigen Spannkopf (6) anliegenden Kohlenstoffkörper (3) zugeordnet ist.

5. Vorrichtung nach Anspruch 4, dadurch gekennzeichnet, daß der Ofenein- und der Ofenausgang (4, 5) je aus einem gegenüber dem Ofengehäuse (7) um die Schrittlänge des Schrittförderers axial verschiebbaren, hülsenartigen Verschluß (11) bestehen, der eine Durchtrittsöffnung (12) für den Strang (2) mit einer radial an den Strang (2) anstellbaren Dichtung (13) aufweist.

6. Vorrichtung nach Anspruch 5, dadurch gekennzeichnet, daß das Ofengehäuse (7) im Bereich des Ofenein- und des Ofenausganges (4, 5) je eine ebenfalls radial an den Strang (2) anstellbare Dichtung (14) trägt und daß die Dichtung (13) der Verschlüsse (11) mit den zugehörigen Dichtungen (14) des Ofenein- und des Ofenausganges (4, 5) abwechselnd an den Strang (2) anstellbar sind.

7. Vorrichtung nach einem der Ansprüche 4 bis 6 mit einem Stromanschluß für den Strang innerhalb des Graphitierungsofens aus in einer achsnormalen Ebene durch das Ofengehäuse geführten, radial zum Strang verlaufenden Elektroden und einer elektrisch leitenden Brücke aus Kohlenstoffkörnern zwischen den Elektroden und dem Strang, dadurch gekennzeichnet, daß die Elektroden des Stromanschlusses (16, 17) zwischen quer zur Ofenachse verlaufenden, einen Strangdurchtritt aufweisenden Trennwänden (25) angeordnet sind, die zwischen sich eine Kohlenstoffpulverschüttung (26) aufnehmen.

8. Vorrichtung nach Anspruch 7, dadurch gekennzeichnet, daß innerhalb des Graphitierungsofens (1) je mit Abstand zum Ofenein- und -ausgang (4, 5) zwei eine Graphitierungszone (19) begrenzende Stromanschlüsse (16, 17) vorgesehen sind und daß die sich zwischen dem Ofenausgang (5) und der Graphitierungszone (19) ergebende Kühlzone (20) mit der sich zwischen der Graphitierungszone (19) und dem Ofeneingang (4) ergebenden Vorwärmzone (18) durch wenigstens eine die Graphitierungszone (19) umgehende Leitung (21) für Schutzgas verbunden ist.

FIG.1

FIG.2

EP 0 354 203 A2

FIG.3

FIG.4

FIG.5

FIG.6